Europäisches Patentamt

European Patent Office

Office européen des brevets

(11) Veröffentlichungsnummer: **0 209 076 B1**

(19)

(12) **EUROPÄISCHE PATENTSCHRIFT**

(45) Veröffentlichungstag der Patentschrift: **30.09.92**

(51) Int. Cl.⁵: **B61L 25/02**, B61L 3/00

(21) Anmeldenummer: **86109380.5**

(22) Anmeldetag: **09.07.86**

(54) **Vorrichtung zum Transportieren und Positionieren von Lasten.**

(30) Priorität: **19.07.85 DE 3525790**

(43) Veröffentlichungstag der Anmeldung:
**21.01.87 Patentblatt 87/04**

(45) Bekanntmachung des Hinweises auf die
Patenterteilung:
**30.09.92 Patentblatt 92/40**

(84) Benannte Vertragsstaaten:
**AT BE CH DE FR GB IT LI LU NL SE**

(56) Entgegenhaltungen:
**DE-A- 1 530 433**
**DE-A- 1 806 479**
**DE-A- 1 949 494**
**US-A- 4 220 221**
**US-A- 4 385 028**

(73) Patentinhaber: **FREDENHAGEN KG**
**Sprendlinger Landstrasse 181**
**W-6050 Offenbach/Main(DE)**

Patentinhaber: **Ziegler Industrie-Elektronik**
**GmbH**
**Ampèrestrasse 3-5**
**W-6070 Langen(DE)**

(72) Erfinder: **Knüttel, Werner**
**Hanauer Landstrasse 51**
**W-6451 Grosskrotzenburg(DE)**
Erfinder: **Ziegler, Stefan**
**Zeisigstrasse 18**
**W-6078 Egelsbach(DE)**

(74) Vertreter: **Stoffregen, Hans-Herbert, Dr.**
**Dipl.-Phys.**
**Patentanwalt, Salzstrasse 11 a, Postfach 21**
**44**
**W-6450 Hanau (Main) 1(DE)**

## Beschreibung

Die Erfindung bezieht sich auf eine Vorrichtung zum Transportieren und Positionieren von Lasten mittels eines oder mehrerer längs einer Laufbahn verfahrbarer Lastträger, an denen Lasten aufgehängt sind, wobei der jeweilige Lastträger mindestens einen Antriebsmotor mit einem Drehzahlistwertgeber aufweist, der mit dem Antriebsmotor in einem Drehzahlregelkreis angeordnet ist und wobei die Drehzahlsollwerte als Impulsfolge erzeugt werden.

Eine Vorrichtung der vorstehend beschriebenen Art ist aus der DE-AI-1 806 479 bekannt. Die Signale für die Geschwindigkeitssollwerte werden einem Träger aufmoduliert und auf der Schleifleitung übertragen, die auch die Betriebsspannung für den Antriebsmotor führt. Die Größe des Drehzahlsollwerts ist eine Funktion des Tastverhältnisses der Impulse, d.h., der Drehzahlsollwert ist umso größer, je länger die Impulse sind. An ausgewählten Stellen längs der Laufbahn sind Detektoren angeordnet, die beim Vorbeilaufen eines Lastträgers die Versorgungsspannungen des hinter dem jeweiligen Detektor angeordneten Schleifleitungsabschnitts beeinflussen, um z. B. den Lastträger anzuhalten.

Es ist auch eine Anordnung zum Anhalten von elektrischen Schienenfahrzeugen an auswählbaren Stellen längs einer Schiene bekannt. Die Anordnung enthält einen die Geschwindigkeit und Istposition des Schienenfahrzeugs digital messenden Istwertgeber, der sich aus einem im Schienenfahrzeug auf einer ungebremsten Drehachse angeordneten Impulsgeber und längs der Fahrbahn mit mäanderförmigen Abschnitten angeordneten Leitungen zusammensetzt. Der Abstand bis zu einem vom Schienenfahrzeug anzufahrenden Haltepunkt wird digital dem Schienenfahrzeug vorgegeben und mit der Istposition verglichen. Bei vorab festgelegten Abständen des Schienenfahrzeuges bis zum Haltepunkt wird eine Bremsung eingeleitet. Die Stärke des Bremsvorgangs richtet sich nach der jeweiligen im Augenblick der Einleitung des Bremsvorgangs gemessenen Fahrzeuggeschwindigkeit und verläuft nach einer vorgegebenen Bremskurve (DE-AI-1 530 433).

Weiterhin sind digital messende Lageistwertgeber für relativ zueinander bewegte Maschinenteile bekannt, wobei entweder eine inkrementale oder eine absolute Lagemessung erfolgt (US-A 4 385 028).

Schließlich ist es bekannt, bei einem Aufzug den für die Einleitung eines Bremsvorgangs nach einer vorgegebenen Bremskurve notwendigen Abstand vor einer Haltestelle zu berechnen und den Bremsvorgang bei Anwahl der Haltestelle an der berechneten Abstandsstelle einzuleiten (US-A 4 220 221).

In Fertigungsbetrieben werden die an verschiedenen Orten innerhalb der Fertigungsanlage zu bearbeitenden oder mit weiteren Teilen zu bestückenden Gegenstände häufig mit Hängebahnen transportiert. Bei größeren Entfernungen zwischen den Bearbeitungs- oder Montagestationen ist es zur Verminderung der Fertigungszeit von Bedeutung, die Gegenstände in möglichst kurzer Zeit transportieren zu können. Häufig finden auch Bearbeitungs- oder Montagevorgänge während der in diesem Fall zumeist langsamen Bewegung der Gegenstände längs der Laufbahnen statt, wobei die Abstände der Lastträger zueinander konstant gehalten werden müssen.

Der Erfindung liegt die Aufgabe zugrunde, eine Vorrichtung der eingangs beschriebenen Art so weiterzubilden, daß schnelle oder langsame Transportgeschwindigkeiten der Lastträger auf einfache Weise vorgegeben werden können und daß an beliebig auswählbaren Stellen längs der Laufbahn ein Anhalten der Lastträger oder ein Übergang zu einer anderen Geschwindigkeit vorgegeben werden kann.

Die Aufgabe wird erfindungsgemäß dadurch gelöst, daß mit dem jeweiligen Lastträger ein dessen Geschwindigkeit und Istposition längs der Laufbahn digital messender Istwertgeber verbunden ist, der bei einer Bewegung des Lastträgers eine Istwertimpulsfolge erzeugt und einen in gleichmäßigen Abständen inkremental geteilten Maßstab aufweist, der durch magnetische, elektromagnetische, kapazitive, optische oder ähnliche Einrichtungen abtastbar ist, daß dem Lastträger digital Lage- und Geschwindigkeitssollwerte als Sollwertimpulsfolge vorgegeben werden, deren Anzahl von Impulsen dem Lagesollwert und deren Frequenz dem Geschwindigkeitssollwert entspricht, und daß die Istwertimpulse der Istwertimpulsfolge und die Sollwertimpulse der Sollwertimpulsfolge einem Phasenregelkreis zuführbar sind, der ein der Phasendifferenz entsprechendes Regelabweichungssignal erzeugt, das als Sollwert dem unterlagerten Drehzahlregelkreis zuführbar ist, der eine Stellgröße für einen Motorsteller erzeugt, über den der Antriebsmotor mit Energie versorgt wird. Die Genauigkeit der Positionierung hängt bei dieser Vorrichtung von der Genauigkeit des verwendeten Meßsystems ab.

Aufgrund der digitalen Messung der Istposition ist die Positionierung bis auf die Teilung des verwendeten Maßstabs genau. Die Regelung der Geschwindigkeit der Lastträger erlaubt die Ausnutzung von Höchstgeschwindigkeiten, die an die mechanischen Gegebenheiten von Lastträger und Last angepaßt werden können.

Da die Sollwertimpulsfolge die Geschwindigkeits- und Positionsinformation enthält, ergibt sich eine Vereinfachung der Anordnung. Es ist nicht erforderlich, für die Lage- und Geschwindigkeitsregelung aufwendige Regelkreise vorzusehen. Ein besonders einfacher Phasenregelkreis läßt sich mit Istwert- und Sollwertimpulsen erreichen, deren Impulsdauer-/Impulspausenverhältnis 1:1 ist.

Vorzugsweise sind mindestens zwei Lastträgern zugleich gleich große Geschwindigkeitssollwerte und gleiche, auf eine Wegstrecke relativ zur Länge der Laufbahn bezogene Lagesollwerte zuführbar. Bei dieser Ausführungsform bewegen sich die beiden Lastträger synchron zueinander. Die Geschwindigkeiten stimmen überein. Wenn der eine Lastträger sich bewegt, anfährt oder anhält, ist dies beim zweiten Lastträger auch der Fall. Der Abstand zwischen den beiden Lastträgern bleibt dabei gleich groß. Mehrere Lastträger können auf die gleiche Weise bewegt werden. Eine solche Arbeitsweise eignet sich für Taktstraßen, in denen an verschiedenen Stellen Arbeiten an den Lasten bzw. am transportierten Gut ausgeführt werden.

Es ist günstig, wenn die Regelabweichung über den Regler einen Gleichrichter mit steuerbaren Gleichrichterelementen beaufschlagt, an den bei einem einmotorigen Lastträger ein Gleichstrommotor und bei einem zweimotorigen Lastträger beide Gleichstrommotoren mit den Ankerwicklungen angeschlossen sind. Eine derartige Anordnung hat eine geringe Verzögerungszeit. Die Regelabweichung bewirkt in sehr kurzer Zeit die Beaufschlagung der Ankerwicklung mit einer entsprechenden Gleichspannung. Die Verzögerungszeiten des Regelkreises werden nur in sehr geringem Maße vom Regler hervorgerufen. Maßgebend sind die Verzögerungszeiten der Regelstrecke, wobei durch eine entsprechende Einstellung des Reglers ein für die jeweiligen Gegebenheiten des Lastträgers und der Last optimales Verhalten erreicht werden kann. Beispielsweise könnten DS-Motoren in Frequenzregelung eingesetzt werden.

Vorzugsweise ist für die Zufuhr der Sollwerte eine parallel zu einer Laufbahn verlaufende Schleifleitung vorgesehen, an die die Lastträger je mit einem Schleifer angeschlossen sind. Die Sollwerte werden dem Lastträger drahtgebunden, per Funksignal, Infrarotsignal bzw. über Ultraschall übertragen. Dabei ist es zweckmäßig, die Energie für den Antrieb der Lastträger mittels Schleifleitungen zu übertragen, die an das Drehstromnetz angeschlossen sind, dessen Spannung in den Lastträgern mittels des Gleichrichters in Gleichstrom umgewandelt wird. Dies bedeutet, daß beispielsweise bereits bestehende Laufbahnen mit Drehstromfahrleitungen mit relativ geringem Aufwand für den Einsatz der oben erläuterten Vorrichtung umgerüstet werden können. Es ist auch möglich, einer der Starkstromleitungen ein hochfrequentes Signal nach Art der Telephonie über Starkstromleitungen zu überlagern, wobei in dem hochfrequenten Bereich die Lage- und Geschwindigkeitsinformation enthalten ist. Das hochfrequente Signal wird auf den Lastträgem mittels Bandfiltern zurückgewonnen und dem Regler zugeführt.

Auf diese Wiese läßt sich eine gesonderte Schleifleitung einsparen. Da die HF-Schwingung nur an ein Netz mit 380 V anzukoppeln ist, das eine relativ geringe Länge hat, ist der Aufwand für eine derartige Übertragung unter Umständen geringer als für eine Übertragung mit einem Schleifdraht.

Zweckmäßigerweise ist der inkremental geteilte Maßstab ein parallel zur Laufbahn angeordnetes Lochband. Hierdurch läßt sich ein besonders wirtschaftlicher Istwertgeber herstellen.

Bei einer bevorzugten Ausführungsform werden die Sollwertimpulse beim Hochfahren und bei Abbremsen der Lastträger nach auf die Massen des jeweiligen Lastträgers und der Last abgestimmten Geschwindigkeitskurven erzeugt. Mit dieser Maßnahme läßt sich ein erwünschtes Beschleunigungs- und Bremsverhalten erreichen. Die Geschwindigkeit beim Hochfahren und Abbremsen kann zweckmäßigerweise linear in Abhängigkeit von der Zeit geändert werden, um konstante Beschleunigungs- und Verzögerungswerte zu erreichen. Damit können unerwünschte Pendelungen der Last während des Anfahrens und Abbremsens vermieden werden.

Vorzugsweise wird für einen auf die Masse der Lastträger und der jeweiligen Last abgestimmten Bremsweg die Differenz aus dem Sollwert des zurückzulegenden Weges und des Istwertes des zurückgelegten Weges mit einer vorgegebenen Bremskurve verglichen und die Bremsung bei Übereinstimmung zwischen der Differenz und dieser Bremskurve eingeleitet. Mit dieser Maßnahme läßt sich eine sehr genaue Positionierung der Lastträger nebst der Last erreichen.

Es ist zweckmäßig, trägheitsarme Motoren als Antrieb für die Lastträger vorzusehen. Mit derartigen Motoren können kurze Hochlaufzeiten bei geringem eigenen Trägheitsmoment erreicht werden. Durch Umpolung der Ankerspannung läßt sich ein schnelles Abbremsen erreichen.

Bei einer anderen bevorzugten Ausführungsform weist der Istwertgeber einen Maßstab mit grober Teilung auf, während eine mechanische Verriegelungsvorrichtung an ausgewählten Haltestellen mittels Zentriermitteln zur Feinpositionierung und Zentrierung der Lastträger vorgesehen ist.

Zweckmäßigerweise enthält die Verriegelungsvorrichtung eine motorisch antreibbare gegen den jeweiligen Lastträger quer zur Transportrichtung verschiebbare Zahnstange, an deren einem Ende eine Rolle befestigt ist, die in ein an dem jeweiligen Lastträger angeordnetes Aufnahmeelement mit einer V-förmigen Ausnehmung bei ausgekuppeltem Antrieb des Lastträgers einschiebbar ist.

Bei einer anderen bevorzugten Ausführungsform ist zumindest an ausgewählten Zonen längs der Laufbahn wenigstens eine Hilfsantriebseinrichtung parallel zur Laufbahn bewegbar, wobei die Hilfsantriebseinrichtung längs einer Zahnstange verschiebbar ist und eine mit dem jeweiligen Lastträger verbindbare Kupplung enthält, über die der Lastträger bei ausgekuppeltem Antrieb mitnehmbar ist. Es handelt sich hierbei um eine Art Shuttle-Betrieb, der dann besonders günstig ist, wenn längs der Schienenbahn verhältnismäßig wenig exakte Positionier- und Halteplätze vorgesehen sind. In diesem Fall kann die Antriebsleistung der Lastträger geringer ausgebildet sein.

Weitere Einzelheiten, Merkmale und Vorteile der Erfindung ergeben sich aus der folgenden Beschreibung eines zeichnerisch dargestellten Ausführungsbeispiels.

Es zeigen:

Fig. 1    eine Ansicht eines längs einer Hängeschiene verfahrbaren Lastträgers von der Seite,

Fig. 2    einen Schnitt längs der Linien I-I der in Fig. 1 dargestellten Vorrichtung,

Fig. 3    eine Ansicht eines längs einer Hängeschiene mit Hilfe einer Hilfsantriebseinrichtung verschiebbaren Lastträgers mit einer angehängten Last in Seitenansicht,

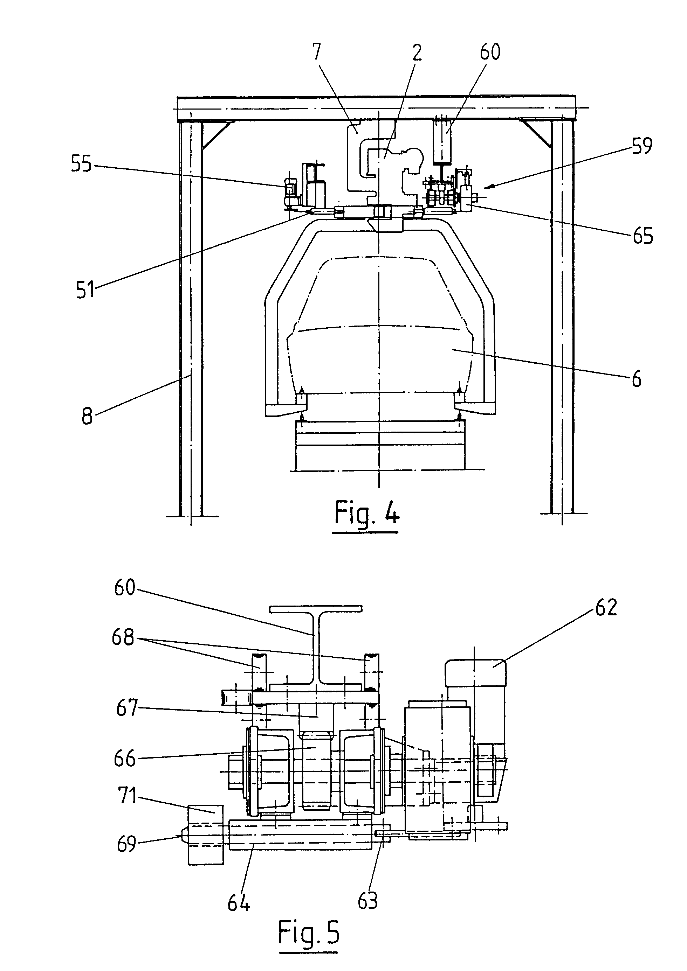

Fig. 4    die in Fig. 1 dargestellte Vorrichtung im Schnitt längs der Linien II-II,

Fig. 5    Einzelheiten der in Fig. 4 dargestellten Vorrichtung von vorne, teilweise im Schnitt,

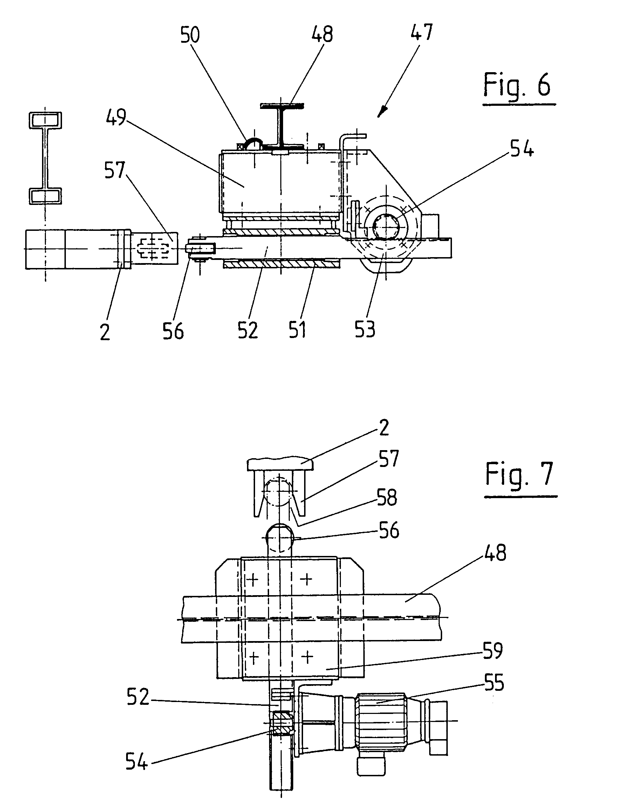

Fig. 6    eine Verriegelungsvorrichtung zur Feinpositionierung des Lastträgers von vorne, teilweise im Schnitt,

Fig. 7    die Verriegelungsvorrichtung gemäß Fig. 6 von oben und

Fig. 8    ein Schaltbild einer Anordnung zur Geschwindigkeits- und Lageregelung des Antriebsmotors eines Lastträgers.

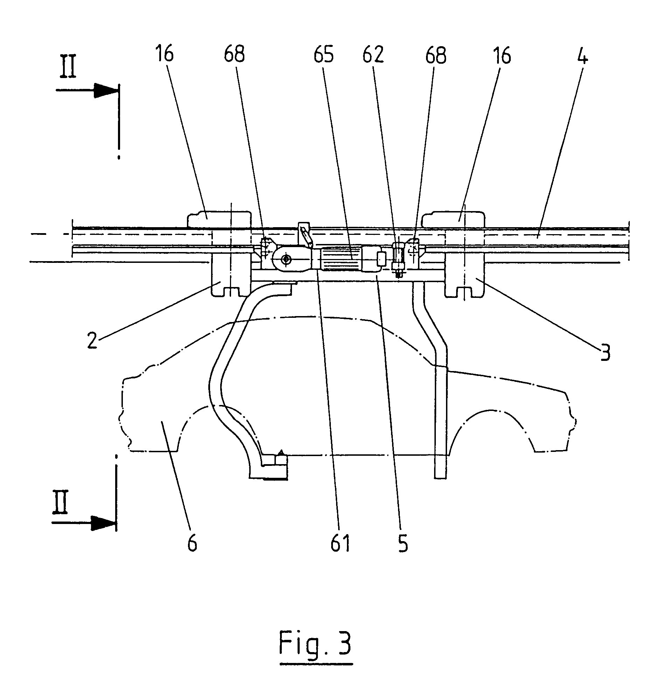

Ein Lastträger 1, der vorzugsweise in der Endmontage bei der Automobilproduktion eingesetzt wird, enthält zwei Laufwerke 2, 3, mit denen sich der Lastträger 1 auf einer Schienenlaufbahn 4 abstützt. Die Laufwerke 2, 3, die in Längsrichtung der Laufbahn 4 hintereinander angeordnet sind, stehen über einem Träger 5 miteinander in Verbindung, der unterhalb der Laufbahn 4 verläuft. Am Träger 5 ist die Last aufgehängt, bei der es sich, wie in Fig. 3 dargestellt, um ein in der Endmontage befindliches Automobil 6 handelt, in dem zum Beispiel noch die Hinterachse, die Vorderachse, der Motor, der Auspuff und gegebenenfalls weitere Teile eingebaut werden sollen.

Die Laufbahn 4 ist eine Doppel-T-Schiene, die in bestimmten Abständen mittels U-förmigen Bögen 7 an Portalträgern 8 aufgehängt ist. Die Laufwerke 2, 3 enthalten jeweils eine Tragrolle 9, die mittels Lagereinheit und Achse 10 drehbar gelagert und an Laufwerke 2 bzw. 3 befestigt ist. Die Tragrollen 9 sind jeweils mit einem nicht näher bezeichneten, breiten Radkranz versehen, der etwa die volle Breite der Doppel-T-Schiene einnimmt. Jedes Laufwerk 2, 3 ist weiterhin mit Führungsrollen 11, 12, 13, 14 versehen, die um senkrechte Achsen drehbar gelagert und seitlich neben den T-förmigen Enden der Doppel-T-Schiene angeordnet sind. Die Führungsrollen 11 bis 14 verhindern, daß der Lastträger 1 die Laufbahn 4 seitlich verlassen kann. Die vertikal wirkenden Kräfte werden von den um eine horizontale Achse drehbaren Rollen 9 auf die Laufbahn 4 übertragen. Der Träger 5 ist an seinen Enden schwenkbar in den Laufwerken 2, 3 gelagert, damit der Lastträger den Krümmungen der Laufbahn 4 folgen kann.

Zumindest eine Tragrolle 9 ist über ein Getriebe 15 mit einem Antriebsmotor 16 verbunden. Es können auch, wie in Fig. 3 dargestellt, beide Tragrollen 9 mit je einem Antriebsmotor 16 verbunden sein.

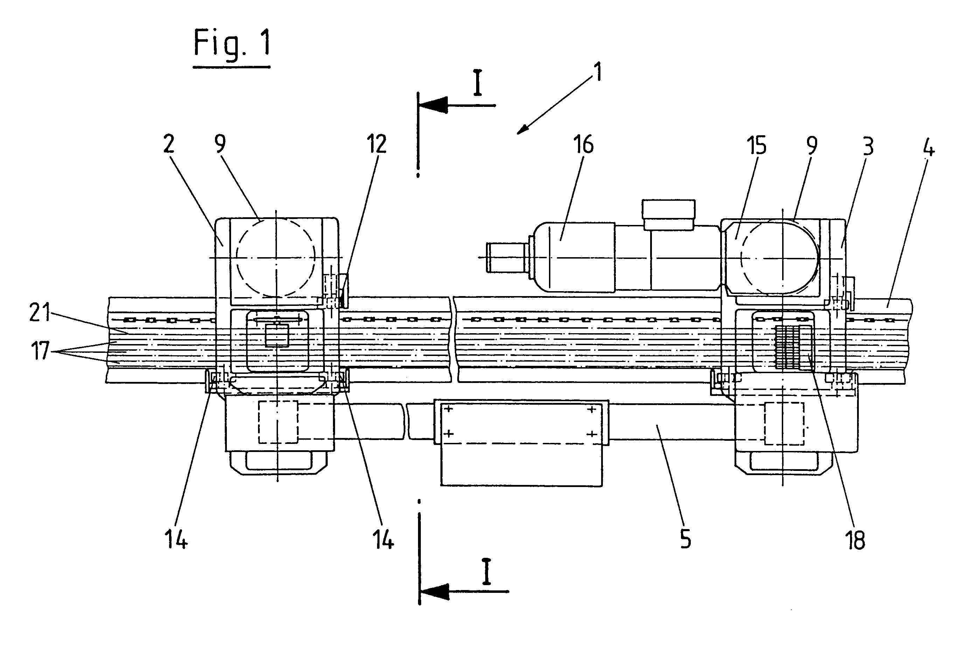

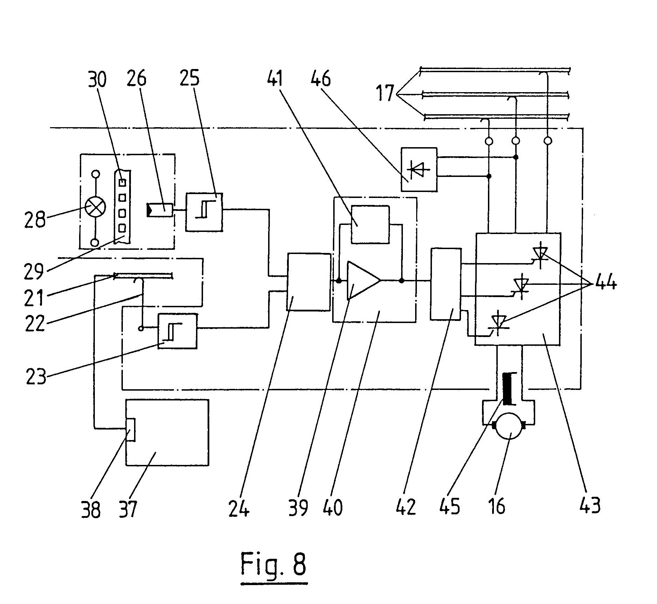

Parallel zu der Laufbahn 4 befinden sich in dem von dem Längssteg und den Doppel-T-Enden der Doppel-T-Schiene umgebenen Raum Stromschienen 17, die als Schleifleitungen ausgebildet und in Fig. 1 strichpunktiert dargestellt sind. Zweckmäßigerweise handelt es sich um an ein 380 V-Drehstromnetz angeschlossene Stromschienen 17, die über federnd angedrückte Schleifer 18 mit dem Lastträger 1 verbunden sind. Auf dem Lastträger 1 befindet sich eine in Fig. 8 näher dargestellte Regel- und Steueranordnung 19, die mit den Schleifern 18 verbunden ist. Auf dem Lastträger stehen somit auch Wechselspannungen zur Verfügung, die für bestimmte Steuerkreise, beispielsweise Endschalter, ausgenutzt werden können.

Weiterhin ist parallel zur Laufbahn 4 und an dieser zum Beispiel über Stützisolatoren 20 befestigt, eine elektrisch leitende Schiene 21 bzw. Schleifleitung verbunden. Die Schiene 21 ist für die Übertragung von Steuerimpulsen bestimmt. Auf der Schiene 21 gleitet ein mit dem Lastträger 1 verbundener Schleifer 22, der in Fig. 8 dargestellt ist.

Der Schleifer 22 ist in der Regel- und Steueranordnung mit einer Impulsformerstufe 23 verbunden, der ein Eingang eines Phasendiskriminators 24 nachgeschaltet ist. Der zweite Eingang des Phasendiskriminators 24 ist an eine weitere Impulsformerstufe 25 angeschlossen, der ein Abtaster 26 eines Istwertgebers 27 vorgeschaltet ist. Es handelt sich um einen inkremental arbeitenden Istwertgeber 27, der an seinem Ausgang eine Folge von Impulsen ausgibt. Der Istwertgeber 27 kann verschieden aufgebaut sein. In Fig. 8 ist ein auf optischer Basis arbeitender Istwertgeber 27 dargestellt. Der Abtaster 26 befindet sich dabei in der Regel- und Steueranordnung 19. Ebenso ist eine Lichtquelle 28 auf dem Lastträger 1 vorgesehen. Ein Maßstab 29 des Istwertgebers 27 ist in Form einer Lochschiene oder eines Lochbandes parallel zur Laufbahn 4 angeordnet. Der als Lochschiene ausgebildete Maßstab 29 enthält in gleichmäßigen Abständen voneinander angeordnete Aussparungen 30, die so breit sind, daß in Längsrichtung gleich breite Aussparungsabschnitte und gleich große Vollmaterialabschnitte aufeinanderfolgen. Wenn eine Relativbewegung zwischen der Lichtquelle 28 und dem Abtaster 26 einerseits sowie dem Maßstab 29 andererseits stattfindet, wird der Abtaster 26 abwechselnd beleuchtet und abgeschaltet. Dabei entsteht am Ausgang des Abtasters 26 eine Impulsfolge, deren Impulse ein Impulsdauer-Impulspausenverhältnis von 1:1 aufweisen. Der Istwertgeber 27 kann auch auf magnetischer oder elektromagnetischer Basis arbeiten, indem zum Beispiel bewegte ferromagnetische Metallteile in einem Sensor Spannungen erzeugen oder indem elektromagnetische Wechselfelder eines Oszillators mit bewegten Metallteilen bedämpft werden.

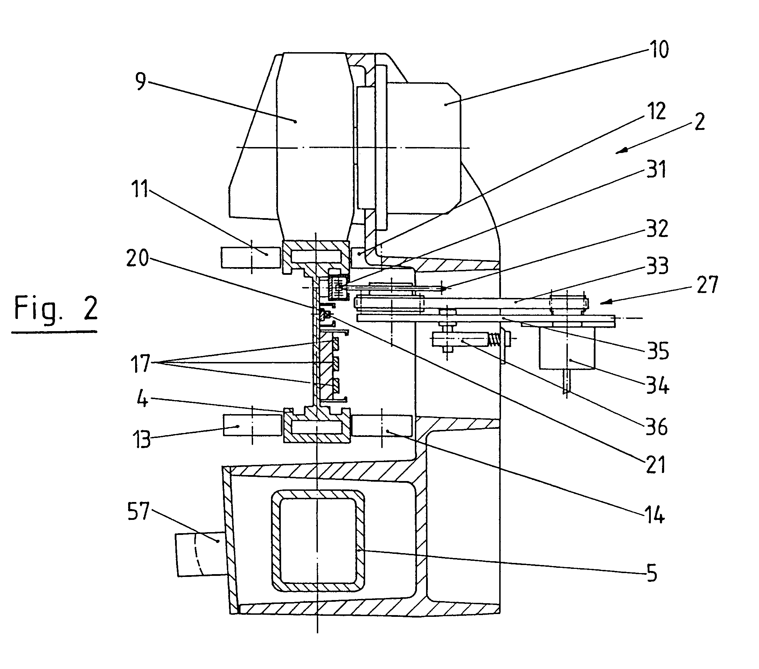

In Fig. 2 ist ein Istwertgeber 27 dargestellt, der ein an eine Rollenkette 31 unter Federvorspannung andrückbares Kettenrad 32 enthält, das über einen Riemenantrieb 33, der zum Beispiel einen Zahnriemen enthält, mit dem Ritzel einer in einem Gehäuse 34 drehbar gelagerten Kodierscheibe verbunden ist, die auf die oben angegebene Weise optoelektrisch, magnetisch oder elektromagnetisch abgetastet wird. Die nicht näher dargestellte Kodierscheibe im Inneren des Istwertgebers 27 enthält gleichmäßig geteilte, einander abwechselnde Abschnitte zur Erzeugung einer Ausgangimpulsfolge. Der Riemenantrieb 33 ist mit dem Gehäuse 34 auf einer Platte 35 angeordnet, die über einen unter Federvorspannung stehenden Tragarm 36 am Laufwerk 2 befestigt ist.

Die Schiene 21 ist mit einer ortsfesten zentralen Steuerung 37 verbunden, in der ein Impulsgeber 38 vorhanden ist, der eine Impulsfolge mit variabler Impulsfrequenz erzeugen kann. Die Impulse des Impulsgebers 38 haben ein Impulsdauer-Impulspausenverhältnis z. B. von 1:1. Der Impulsgeber 38 ist der Sollwertgeber für die Regel- und Steueranordnung 19. Die Anzahl der Sollwertimpulse entspricht dem vom Lastträger 1 längs der Laufbahn 4 zurückzulegenden Weg. Jedem Impuls ist dabei ein inkrementaler Wegabschnitt zugeordnet, der sich aus der Teilung, d.h. dem aus einer Aussparung 30 und dem zwischen zwei benachbarten Aussparungen 30 liegenden Vollmaterialabschnitt des Maßstabs 29 ergibt. Bei dem in Fig. 2 dargestellten Istwertgeber richtet sich der inkrementale Wegabschnitt nach dem Übersetzungsverhältnis, das sich aus den Abmessungen des Kettenrades 32, dem Übersetzungsverhältnis des Riemenantriebs 33 und der Lage der Abtaststelle der nicht näher dargestellten Kodierscheibe ergibt.

Eine weitere Ausführungsmöglichkeit besteht darin, den Impulsgeber direkt auf den Antriebsmotor zu installieren.

Der Phasendiskriminator 24 erzeugt ein der Phasendifferenz zwischen den Sollwertimpulsen und den Istwertimpulsen proportionales Ausgangssignal, die Regelabweichung, die einem aus einem Verstärker 39 mit einem Rückkopplungsnetzwerk 41 laufenden Regler 40 zugeführt wird. Der Ausgang des Reglers 40 speist eine Impulserzeuger- und Impulsverteilerschaltung 42, die drei um jeweils (120°) gegeneinander phasenverschobene Impulse für die Phasenanschnittssteuerung eines Gleichrichters 43 erzeugt. Der Gleichrichter 43 ist eine Drehstrom-Brückenschaltung, die steuerbare Gleichrichterelemente 44 enthält, bei denen es sich um Thyristoren oder Triacs handeln kann. Es sind beispielsweise auch Steuerelemente wie Transistoren möglich. Der Gleichrichter 43 wird von den Stromschienen 17 gespeist. Der Ausgang des Gleichrichters 43 ist mit dem Anker des Gleichstrommotors 16 verbunden. Die Feldwicklung 45 des Gleichstrommotors 16 wird über einen separaten Gleichrichter 46 gespeist. Auch die in der Regel- und Steueranordnung 19 enthaltenen elektronischen Bausteine, der Abtaster 26, die Impulsformerstufen 23, 25, der Phasendiskriminator 24, der Regler 40 und die Impulserzeuger- und Impulsverteilerschaltung 42 werden von einer nicht dargestellten separaten Gleichspannungsquelle versorgt.

Es ist zweckmäßig, die Regel- und Steueranordnung mit einem unterlagerten Drehzahlregelkreis auszubilden. In diesem Fall ist beispielsweise zugleich ein Tachogenerator mit Hilfe der in Fig. 2 dargestellten Bauteile 31, 32, 33, 35, 36 realisiert, wobei der Tachogenerator im Gehäuse 34 angeordnet ist. Der Tachogenerator erzeugt, z. B. über die Messung der Zeit zwischen aufeinanderfolgenden Impulsen der Kodierscheibe, den Istwert der Drehzahl. Der Sollwert der Drehzahl ergibt sich aus der Lageregelabweichung, d.h. der Differenz zwischen dem Lagesollwert des Lastträgers 1 und dem bereits von diesem zurückgelegten Weg. Bei einem Phasenregelkreis der in Fig. 8 dargestellten Art ist der Drehzahlsollwert auch aus der Phasendifferenz herleitbar.

Beim Hochfahren des Lastträgers zum Beispiel mit angehängter Last werden die Sollwertimpulse nach einer vorgebbaren Geschwindigkeitskurve an die Schiene 21 angelegt, d. h. es wird eine Frequenz angelegt, die mit der Zeit ansteigt, bis eine der gewünschten Drehzahl entsprechende Frequenz erreicht ist. Die Zunahme der Frequenz der Sollwertimpulse ist an die Masse des Lastträgers und der Last angepaßt. Der Verlauf der Sollwertimpulsfrequenz kann zum Beispiel so gewählt sein, daß die Beschleunigung des Lastträgers 1 mit der Last konstant oder ungefähr konstant ist.

Beim Abbremsen werden die Sollwertimpulse ebenfalls nicht mit gleichbleibender Frequenz erzeugt. Die Frequenz der Sollwertimpulse nimmt nach einer Geschwindigkeitskurve bis zum Wert null ab. Die Frequenz kann so gewählt sein, daß der Lastträger 1 mit seiner Last beim Abbremsen eine konstante oder nahezu konstante Bremsverzögerung hat. Maßgebend ist der Beginn des Bremsvorgangs. Für bestimmte Massen und Reibungsverhältnisse ergibt sich ein bestimmter Bremsweg, der vorab zum Beispiel durch Messung ermittelt wird. Während der Bewegung des Lastträgers 1 mit oder ohne Last wird für die jeweilige Bremskurve die Differenz zwischen dem Lagesollwert und dem bereits vom Lastträger 1 zurückgelegten Weg gebildet. Die Differenz ergibt sich bei einem Phasenregelkreis der in Fig. 8 dargestellten Art aus der Anzahl der auf die Schiene 21 zu übertragenden Sollwertimpulse und der bereits ausgegebenen Anzahl von Istwertimpulsen, die beispielsweise mit einem Zähler bestimmt wird. Diese Differenz wird mit dem Bremsweg verglichen. Stimmen die Differenz und der Bremsweg überein, dann wird die Bremsung eingeleitet. Hierdurch läßt sich eine genaue Positionierung des Lastträgers 1 erreichen. Es ist aber auch eine Reduzierung der Transportgeschwindigkeit auf eine entsprechende Weise möglich. Die Frequenz der Sollwertimpulse wird dann nach der vorgegebenen Geschwindigkeitskurve nicht bis auf null sondern auf einen niedrigeren Wert reduziert, der zum Beispiel für die Bearbeitung oder Montage während der Bewegung der Last geeignet ist. Die obengenannten Maßnahmen ermöglichen die genaue Festlegung derjenigen Stelle an der Laufbahn 4, an der die niedrige Geschwindigkeit erreicht wird. Dies ist zum Beispiel kurz vor einer Arbeitsstation der Fall.

Die Teilung des Maßstabs 29 legt die Genauigkeit fest, mit der eine Position längs der Laufbahn 4 angefahren werden kann. Eine relativ grobe Teilung vereinfacht den Istwertgeber 27 und die Regel- und Steueranordnung 19. Die Regel- und Steueranordnung wird dann nicht nur zur Synchronfahrt sondern auch zur Grobpositionierung verwendet, während für die Feinpositionierung eine Verriegelungsvorrichtung verwendet wird, die zugleich den Lastträger 1 in seiner angesteuerten Position fixiert. An der Last bzw. dem Fördergut können dann Arbeiten ausgeführt werden.

Eine Verriegelungsvorrichtung 47 enthält eine an einem Träger 48 befestigte Verlagerung 49, die in Längsrichtung des Trägers 48 mittels eines Arretiermechanismus 50 an ausgewählten Stellen befestigt werden kann. Der Träger 48 verläuft parallel zur Laufbahn 4. Die Verlagerung 49 ist mit einer Führungsbuchse 51 versehen, in der eine Zahnstange 52 längsverschiebbar gelagert ist. Die Zähne 53 befinden sich an dem über der Führungsbuchse 51 hinausragenden einen Ende der Zahnstange 52. In die Zähne 53 greift das Ritzel 54 eines Drehmagneten 55 ein. Das andere Ende der Zahnstange 52 trägt eine Rolle 56, die mit ihrem Rand über den Umriß der Zahnstange 52 hinausragt. An dem Laufwerk 2 befindet sich ein Aufnahmestück 57, das eine V-förmige Ausnehmung 58 enthält, in die die Rolle 56 nahezu spielfrei eingeschoben werden kann.

Wenn der Lastträger 1 die mit der Steuerung 37 vorgegebene Endposition erreicht hat, bleibt dieser stehen, da die Ankerspannung des Gleichstrommotors 16 auf null geregelt wird und der Motor zum Stillstand kommt. Danach wird der Antrieb ausgekuppelt. Dies kann z. B. durch eine mechanische Kupplung innerhalb des Getriebes, die mittels eines Betätigungshebels außerhalb des Getriebes von einer stationären Steuerungskurve pneumatisch bzw. motorisch betätigt wird, erfolgen. Unmittelbar vor Erreichen der Zielposition wird durch ein elektrisch oder magnetisch betätigtes Schaltelement der Hebel in Bewegung versetzt, um zu entkuppeln. Die Kupplung ist nicht näher dargestellt. Eine weitere Möglichkeit stellt eine elektromagnetische Schaltkupplung dar. Die Steuerspannung für die Kupplung kann über eine weitere, nicht dargestellte Schiene oder Schleifleitung dem Lastträger 1 zugeführt werden. Nunmehr kann die Feinpositionierung des Lastträgers 1 durchgeführt werden. Nach dem Auskuppeln wird der Drehmagnet 55 an Spannung gelegt. Die Rolle 56 befindet sich aufgrund der Grobpositionierung des Lastträgers 1 im Fangbereich der V-förmigen Ausnehmung 58. Der als Stellmotor arbeitende Drehmagnet 55 schiebt die Zahnstange 52 gegen die Ausnehmung 58. Wenn die Rolle 56 dabei auf eine Flanke der V-förmigen Ausnehmung 58 trifft, wird der Lastträger 1 über eine entsprechende Kraft längs der Laufbahn 4 um ein kleines Stück so weit bewegt, bis die Rolle genau im Zentrum der V-förmigen Ausnehmung 58 angeordnet ist. In dieser Stellung hält die Rolle 56 den Lastträger 1 fest, so daß keine Verschiebebewegungen längs der Laufbahn 4 möglich sind. Durch die genaue Positionierung des Lastträgers 1 sind auch weitgehend automatische Bearbeitungs- und Montagevorgänge zum Beispiel mit Hilfe von Handhabungsgeräten möglich. Es ist möglich, die Kupplung und den Drehmagnet 55 über ein von der Steuerung 37 betätigbares, nicht dargestelltes Schaltglied wechselweise derart an Spannung zu legen, daß zum Beispiel der Drehmagnet betätigt wird, wenn die Kupplung ausgeschaltet ist.

Mit der oben beschriebenen Vorrichtung läßt sich eine stufenlose variable Geschwindigkeit in einem weiten Drehzahlbereich erzielen. Es ist, wie dargelegt, eine geregelte Brems- und Beschleunigungscharakteristik möglich. Für Not-Aus, Auffahrschalter oder Betriebshalt können unterschiedliche Bremsmomente vorgegeben werden.

Die Vorrichtung kann im wesentlichen für folgende Aufgaben eingesetzt werden:

- Transport von Schwerlasten
- Schnelle Überwindung von langen Strecken
- Montageaufgaben nach dem Stop- and Go-Prinzip
- Montageaufgaben am langsam laufenden Objekt

Als Beispiel sei der Einsatz in der Endmontage in der Automobilproduktion erwähnt, einem Bereich, in dem der Einbau von Hinterachse, Vorderachse, Motor, Auspuff usw. weitgehendst automatisch erfolgen soll, also auch gegebenenfalls mittels Robotern.

Der Lastträger 1 ist beispielsweise mii geregelten Gleichstromantrieben versehen und einsatzfähig für Niedrig- und Hochgeschwindigkeitsbereiche und für genaues Anfahren von Positionen. Beim Stop-and-Go werden Taktwege von Arbeitsstation zu Arbeitsstation mit max. Geschwindigkeit und Beschleunigung zurückgelegt, um max. Stillstandszeiten zu realisieren. Die Last, zum Beispiel die Karosserie eines Fahrzeuges, bleibt nach der Zentrierung und Fixierung des Lastträgers 1 in den Hängeraufnahmen fixiert. Voraussetzung ist das automatische Auskuppeln der Antriebsmaschine. In den einzelnen Arbeitsstationen können mit Hand, mit Sondereinrichtungen oder mit Robotern zum Beispiel Montageeinbauarbeiten an den Karossen vorgenommen werden.

Wegen der hohen Beschleunigung sind die Lastträger 1 vorzugsweise mit zwei Antriebsmaschinen versehen, wobei eine davon bei entsprechender Verringerung der Beschleunigung auch als Standby verwendet werden kann. Die beiden Antriebsmaschinen, vorzugsweise Gleichstrommotoren, werden auf Gleichlauf geregelt. Sie weisen nicht dargestellte Tachogeneratoren auf, die den Drehzahlistwerten entsprechende Spannungen abgeben, die in einem Regler mit dem Sollwert verglichen werden.

Der Lastträger 1 kann nicht dargestellte Mittel aufweisen, um die Lasten, falls erforderlich, vertikal zu bewegen.

Hierzu könnten Hubwinden, angetriebene Kegel- bzw. Gewindespindeln, Scherengestänge, hydraulisch bzw. elektromotorisch betätigt etc., zur Anwendung kommen. Vielfach werden mehrere Lastträger 1 längs der gleichen Laufbahn 4 bewegt. Es kann sich hierbei um eine Taktstraße in der Automobilindustrie handeln. Die Lastträger 1 hängen dann an der gleichen Schiene 21 für die Zufuhr der Sollwerte. Dies bedeutet, daß den Lastträgern die gleichen Lage- und Geschwindigkeitssollwerte zugeführt werden. Die Lastträger 1 bewegen sich deshalb längs der Laufbahn 4 mit den gleichen Geschwindigkeiten. Bei den Lagesollwerten handelt es sich um Relativwerte, d. h. jeder neue Lagesollwert entspricht einer Wegstrecke längs der Laufbahn 4. Die Lagesollwerte werden somit nach Art von Kettenmaßen aneinandergereiht. Die Lastträger 1 bewegen sich in gleichbleibenden Abständen synchron zueinander. Es ist möglich, die Abstände zwischen den Lastträgern 1 auf die Abstände zwischen Bearbeitungsstationen für die Lasten bzw. das Fördergut entsprechend einzustellen. Auf diese Weise ist z. B. ein taktweises Arbeiten an den Lasten bzw. dem Fördergut durchführbar.

Falls beabsichtigt ist, eine Vielzahl von Lastträgern 1 bzw. Fahrzeugen einzusetzen, kann aus Kostengründen auch die Fahrzeug-Shuttle-Kombination gewählt werden, wenn nur verhältnismäßig wenig Bearbeitungsplätze vorgesehen sind. Die Fahrzeuge verfügen dann über eine geringere Leistung, aber im Shuttle-Bereich kann auf die gleichen vorerwähnten Fahrleistungen zurückgegriffen werden. Für den Shuttle-Antrieb ist eine Hilfsantriebseinrichtung 59 vorgesehen, die einen längs einer Schiene 60 verschiebbaren Antriebskörper 61 enthält. Der Antriebskörper 61 weist einen Motor 62 zum Betätigen einer Vorschubstange 63 auf, die in einem Rohr 64 längsverschiebbar angeordnet ist. Weiterhin ist ein Motor 65 vorgesehen, mit dem ein Zahnrad 66 antreibbar ist, das in eine an der Unterseite der Schiene 60 befestigte Zahnstange 67 eingreift. Der Antriebskörper 61 enthält Rollen 68, mit denen er längs der Schiene 60 geführt wird.

Das eine Ende 69 der Vorschubstange 63 ist so angeordnet, daß es in eine Öffnung 70 eines Mitnehmers 71 am Lastträger 1 eingreifen kann.

Der Antriebskörper 61 bewegt sich im Reversierbetrieb entlang einer Zahnstange und wird z. B. mit einem Gleichstrom-Scheibenläufer-Motor 65 angetrieben. In der Shuttle-Strecke angekommen, wird der Lastträger mit dem Antriebskörper 61 gekuppelt, der den Weitertransport bei ausgekuppelten Antriebsrollen des Lastträgers 1 übernimmt. Es ist also entweder der Lastträgerantrieb oder der Shuttle-Antrieb im Einsatz. Beim Einsatz eines entsprechenden Regelaufwandes kann auf zusätzliche Zentriersperren in der Bearbeitungsposition verzichtet werden. Hierfür ist ein Maßstab 29 mit großer Auflösung erforderlich.

Im kombinierten Verfahren lassen sich auch Stop-and-Go mit der Montage während einer Langsamfahrt vereinen, z. B. wenn nach automatisch durchgeführten Einbauarbeiten noch manuelle Einbauarbeiten vorgenommen werden sollen. In diesem Fall kann die Transportgeschwindigkeit gestuft, z. B. wahlweise von 1 bis 10 m/min variiert werden. Lastträger bzw. Fahrzeuge, die in eine solche Strecke einfahren, folgen sich mit einer hohen Abstands-Haltegenauigkeit, wobei auch unterschiedliche Fahrzeugabstände beibehalten werden, wenn die Fahrzeugzuteilung unregelmäßig erfolgt.

Eine Montage, die nach dem beschriebenen Prinzip betrieben wird, hat den Vorteil einer hohen Flexibilität während des Betriebes und auch wenn erweitert oder umgerüstet werden muß, und es können aus der Montagelinie, z. B. in Nacharbeitsstrecken, Fahrzeuge ein- und ausgeschleust werden. Auch werden Steig- und Gefällestrecken bis zu gewissen Steigungen bzw. Neigungen ohne Hilfsketten überwunden.

**Patentansprüche**

1. Vorrichtung zum Transportieren und Positionieren von Lasten mittels eines oder mehrerer längs einer Laufbahn (4) verfahrbarer Lastträger (1), an denen Lasten aufgehängt sind, wobei der jeweilige Lastträger (1) mindestens einen Antriebsmotor (16) mit einem Drehzahlistwertgeber aufweist, der mit dem Antriebsmotor (16) in einem Drehzahlregelkreis angeordnet ist und wobei die Drehzahlsollwerte als Impulsfolge erzeugt werden, **dadurch gekennzeichnet**, daß mit dem jeweiligen Lastträger (1) ein dessen Geschwindigkeit und Istposition längs der Laufbahn digital messender Istwertgeber (27) verbunden ist, der bei einer Bewegung des Lastträgers (1) eine Istwertimpulsfolge erzeugt und einen in gleichmäßigen Abständen inkremental geteilten Maßstab (29) aufweist, der durch magnetische, elektromagnetische, kapazitive, optische oder ähnliche Einrichtungen abtastbar ist, daß dem Lastträger digital Lage- und Geschwindigkeitssollwerte als eine Sollwertimpulsfolge vorgegeben werden, deren Anzahl von Impulsen dem Lagesollwert und deren Frequenz dem Geschwindigkeitssollwert entspricht, und daß die Istwertimpulse der Istwertimpulsfolge und die Sollwertimpulse der Sollwertimpulsfolge einem Phasenregelkreis (24) zuführbar sind, der ein der Phasendifferenz entsprechendes Regelabweichungssignal erzeugt, das als Sollwert dem unterlagerten Drehzahlregelkreis zuführbar ist, der eine Stellgröße für einen Motorsteller erzeugt, über den der Antriebsmotor (16) mit Energie versorgt wird.

2. Vorrichtung nach Anspruch 1, **dadurch gekennzeichnet**, daß mindestens zwei Lastträgern (1) zugleich gleich große Geschwindigkeitssollwerte und gleiche, auf eine Wegstrecke relativ zur Länge der Laufbahn bezogene Lagesollwerte zuführbar sind.

3. Vorrichtung nach Anspruch 1 oder 2, **dadurch gekennzeichnet**, daß für die Zufuhr der Sollwerte eine parallel zu einer Laufbahn (4) für den Lastträger (1) verlaufende Schleifleitung (21) vorgesehen ist, an die die Lastträger (1) je mit einem Schleifer (22) angeschlossen sind.

4. Vorrichtung nach einem der vorhergehenden Ansprüche, **dadurch gekennzeichnet**, daß der inkremental geteilte Maßstab (29) ein parallel zur Hängebahn (4) angeordnetes Lochband oder Rasterband ist.

5. Vorrichtung nach einem der vorhergehenden Ansprüche, **dadurch gekennzeichnet**, daß der Istwertgeber ein Kettenrad (32) aufweist, das in eine Rollenkette (31) eingreift, die parallel zur Laufbahn angeordnet ist.

6. Vorrichtung nach einem der vorhergehenden Ansprüche, **dadurch gekennzeichnet**, daß die Sollwertimpulse beim Hochfahren und beim Abbremsen des Lastträgers (1) und der Last nach auf die Massen des jeweiligen Lastträgers (1) und der Last abgestimmten Beschleunigungskurven vorgegeben werden.

7. Vorrichtung nach einem der vorhergehenden Ansprüche, **dadurch gekennzeichnet**, daß für einen auf die Masse der Lastträger (1) und der jeweiligen Last abgestimmten Bremsweg die Differenz aus dem Sollwert des zurückzulegenden Weges und dem Istwert des zurückgelegten Weges mit einer vorgegebenen Bremskurve verglichen und die Bremsung bei Übereinstimmung zwischen der Differenz und dieser Bremskurve eingeleitet wird.

8. Vorrichtung nach einem der vorhergehenden Ansprüche, **dadurch gekennzeichnet**, daß der Istwertgeber (27) einen Maßstab (29) mit grober Teilung aufweist, während eine mechanische Verriegelungsvorrichtung (47) an ausgewählten Haltestellen längs der Laufbahn (4) mittels Zentriermitteln zur Feinpositionierung und Zentrierung der Lastträger (1) vorgesehen ist.

9. Vorrichtung nach einem der vorhergehenden Ansprüche,

**dadurch gekennzeichnet,**

daß der Istwertgeber (27) ein Drehfeldgeber wie Synchro- oder Resolver-Drehfeldgeber oder Winkelcodierer ist.

10. Vorrichtung nach einem der vorhergehenden Ansprüche,

**dadurch gekennzeichnet,**

daß zur Anpassung der jeweiligen Transportbedingungen mittels einer mitfahrenden Rechen- und Speichereinheit eine Frequenzteilung der fremdzugeführten oder selbsterzeugten Lagesollwerte erfolgt.

11. Vorrichtung nach einem der vorhergehenden Ansprüche,

**dadurch gekennzeichnet,**

daß vor oder während der Transportphase ein Fahrprogramm bezüglich Zielposition, Wegstrecke, Hilfsbefehle und Teilgeschwindigkeiten in eine mitfahrende Rechen- und Speichereinheit übertragbar ist.

**Claims**

1. A device for transporting and positioning of loads by means of one or more load carriers (1) movable along a track (4) and from which loads are suspended, where the respective load carrier (1) has at least one drive motor (16) having a speed actual-valve transmitter which is disposed together with said drive motor (16) in a speed control loop and where the speed set-point values are generated as a pulse sequence,

**wherein**

an actual-value transmitter (27) digitally measuring the speed and actual position of the respective load carrier (1) along said track is connected to said load carrier, generates an actual-value pulse sequence when said load carrier (1) moves, and has a scale (29) which is incrementally graduated at regular intervals and which can be scanned by magnetic, electromagnetic, capacitive, optical or similar devices, wherein digital position and speed set-point values can be preset for said load carrier as a set-point pulse sequence whose number of pulses corresponds to the set-point position and whose frequency corresponds to the set-point speed, and wherein the actual-value pulses of the actual-value pulse sequence and the set-point value pulses of the set-point value pulse sequence can be passed to a phase control loop (24) which generates a control deviation signal corresponding to the phase difference and passable to the auxiliary speed control loop which generates a variable for a motor setter via which said drive motor (16) is supplied with energy.

2. A device according to Claim 1,

**wherein**

identical speed set-point values and identical position set-point values based on a travel distance relative to the length of said track are passable to at least two load carriers (1) simultaneously.

3. A device according to Claim 1 or 2,

**wherein**

a contact line (21) parallel to a track (4) for said load carrier (1) is provided for passing of said set-point values, to which line said load carriers (1) are connected with one sliding contact (22) each.

4. A device according to one of the previous claims,

**wherein**

said incrementally graduated scale (29) is a perforated strip or grid strip disposed parallel to said track (4).

5. A device according to one of the previous claims,

**wherein**

said actual-value transmitter has a sprocket wheel (32) engaging in a roller chain (31) disposed parallel to said track.

6. A device according to one of the previous claims,

**wherein**

said set-point value pulses during acceleration and deceleration of said load carrier (1) and dependent on the load are preset to the weights of the respective load carrier (1) and to the acceleration curves matched to said load.

7. A device according to one of the previous claims,

**wherein**

the difference between the set-point value of the distance to be travelled and the actual value of the distance travelled is compared with said deceleration curve for a deceleration distance matched to the weights of said load carrier (1) and of the respective load, and deceleration is initiated upon correspondence of said difference and said deceleration curve.

8. A device according to one of the previous claims,

**wherein**
said actual-value transmitter (27) has a scale (29) with a rough graduation, whereas a mechanical locking device (47) is provided at selected stopping points along said track (4) by means of centering means for fine positioning and centering of said load carriers (1).

9. A device according to one of the previous claims,
**wherein**
said actual-value transmitter (27) is a rotary-field transmitter such as a synchro or resolver transmitter or angle encoder.

10. A device according to one of the previous claims,
**wherein**
a frequency division of the externally supplied or self-generated position set-point values is performed in order to adjust the respective transportation conditions by means of an attached computation and memory unit.

11. A device according to one of the previous claims,
**wherein**
before or during the transportation phase a travel program for destination position, travel distance, help commands and part-speeds is transferrable to an attached computation and memory unit.

**Revendications**

1. Dispositif pour le transport et le positionnement de charges à l'aide d'un ou de plusieurs supports de charge (1) déplaçables le long d'une glissière (4), supports auxquels sont suspendues des charges, le porte-charges (1) présentant un moteur d'entraînement (16) avec un générateur de valeurs effectives de vitesse lequel est, avec le moteur d'entraînement (16), disposé dans un circuit régulateur, les valeurs de consigne de vitesse étant générées sous forme de train d'impulsions,
**caractérisé en ce que**
un générateur de valeurs effectives (27) est relié au porte-charges (1) et mesurant numériquement sa vitesse et sa position effective le long de la glissière, générateur qui, lors d'un mouvement du porte-charges (1), produit un train d'impulsions de valeur effective et présente une échelle (29) divisée numériquement à intervalles réguliers, échelle qui peut être palpée par des dispositifs magnétiques, électromagnétiques, capacitifs, optiques ou similaires, en ce que des valeurs de consigne de position et de vitesse sont imposées numériquement au porte-charges sous forme de train d'impulsions de valeur de consigne, train dont le nombre d'impulsions correspond à la valeur de consigne de position et dont la fréquence correspond à la valeur de consigne de vitesse, et en ce que les impulsions de valeurs effectives du train de d'impulsions de valeurs effectives et les impulsions de valeurs de consigne du train de valeurs de consigne peuvent être acheminées à un circuit de régulation des phases (24) qui génère un signal de déviation correspond à la différence de phase, signal qui est acheminable, en tant que valeur de consigne, au circuit secondaire de régulation de vitesse qui génère une variable réglante pour un régulateur de moteur à l'aide duquel le moteur d'entraînement (16) est alimenté en énergie.

2. Dispositif suivant la revendication n° 1,
**caractérisé en ce que**
des valeurs de consigne de vitesse de grandeurs identiques et des valeurs de consigne de position identiques et se rapportant à un parcours relativement à la longueur de la glissière sont acheminables à au moins deux porte-charges (1).

3. Dispositif suivant la revendication n° 1 ou n° 2,
**caractérisé en ce que,**
pour l'acheminement des valeurs de consigne, est prévue une ligne de contact (21) suivant un tracé parallèle à une glissière (4) destinée au porte-charges (1), ligne à laquelle sont raccordés les porte-charges (1) dotés respectivement d'un élément de contact (22).

4. Dispositif suivant l'une des revendications précédentes,
**caractérisé en ce que**
l'échelle divisée numériquement (29) est une bande perforée ou une bande tramée disposée parallèlement à la voie suspendue (4).

5. Dispositif suivant l'une des revendications précédentes,
**caractérisé en ce que**
le générateur de valeurs effectives présente une roue à chaîne (32) qui s'engage dans une chaîne à rouleaux (31) disposée parallèlement à la glissière.

6. Dispositif suivant l'une des revendications précédentes,
**caractérisé en ce que**
les impulsions de valeurs de consigne sont transmises lors de la montée et du freinage du porte-charges (1) et des courbes d'accélération adaptées, suivant la charge, aux masses du porte-charge concerné (1) et à la charge.

7. Dispositif suivant l'une des revendications précédentes,
**caractérisé en ce que,**
pour une course de freinage adaptée à la masse des porte-charges (1) et à la charge concernée, la différence entre la valeur de consigne de la distance à parcourir et la valeur effective de la distance parcourue est comparée avec la courbe de freinage définie et en ce que le freinage est déclenché en cas de concordance entre la différence et cette courbe de freinage.

8. Dispositif suivant l'une des revendications précédentes,
**caractérisé en ce que**
le générateur de valeurs effectives (27) présente une échelle (29) à graduation grossière, tandis qu'un dispositif de verrouillage mécanique (47) est prévu, en des points d'arrêt disposés le long de la glissière (4), à l'aide de moyens de centrage destinés au positionnement précis et au centrage des porte-charges (1).

9. Dispositif suivant l'une des revendications précédentes,
**caractérisé en ce que,**
le générateur de valeurs effectives (27) est un transmetteur tel qu'un synchro-transmetteur ou un synchro-décomposeur, ou encore un codeur angulaire.

10. Dispositif suivant l'une des revendications précédentes,
**caractérisé en ce que,**
pour l'adaptation des conditions de transport à l'aide d'une unité mobile de calcul et de mémorisation, a lieu une division de fréquence des valeurs de consigne de position de provenance externe ou auto-générées.

11. Dispositif suivant l'une des revendications précédentes,
**caractérisé en ce que,**
avant ou pendant la phase de transport, un programme de déplacement concernant position cible, parcours, ordres auxiliaires et vitesses partielles peut être transféré dans une unité mobile de calcul et de mémorisation

Fig. 1

Fig. 2

**Fig. 3**

Fig. 4

Fig. 5

Fig. 6

Fig. 7

Fig. 8